# EUROPÄISCHE PATENTSCHRIFT

(11) **EP 3 926 166 B1**
(45) Veröffentlichungstag und Bekanntmachung des Hinweises auf die Patenterteilung: **24.04.2024**
(21) Anmeldenummer: 21179047.2
(22) Anmeldetag: 11.06.2021
(51) Int. Cl.: F03D 80/10, G08G 5/00

(54) **ANORDNUNG ZUM STEUERN EINER BEDARFSGERECHTEN HINDERNISBEFEUERUNG EINER WINDENERGIEANLAGE UND WINDENERGIEANLAGE**
WIND TURBINE AND ARRANGEMENT FOR CONTROLLING NEEDS-BASED OBSTACLE LIGHTING OF A WIND TURBINE
AGENCEMENT DE COMMANDE D'UN BALISAGE D'OBSTACLE EN FONCTION DES BESOINS D'UNE ÉOLIENNE ET ÉOLIENNE

(30) Priorität: 15.06.2020 DE 102020115745
(43) Veröffentlichungstag der Anmeldung: 22.12.2021
(73) Patentinhaber: Dark Sky GmbH, 17033 Neubrandenburg (DE)
(72) Erfinder: Herrholz, Dipl.-Ing. (FH) Thomas, 17099 Galenbeck OT Schwichtenberg (DE)
(74) Vertreter: Bittner, Thomas L.

(56) Entgegenhaltungen:
- DE-A1-102017 127 168
- DE-U1-202019 101 060
- GB-A- 2 569 534
- US-B2- 7 355 522

## Beschreibung

Die Erfindung betrifft eine Anordnung zum Steuern einer bedarfsgerechten Hindernisbefeuerung einer Windenergieanlage und Windenergieanlage.

### Hintergrund

Die Hindernisbefeuerung dient bei Windenergieanlagen dazu, diese zu kennzeichnen, insbesondere auch in der Nacht und bei schlechter Sicht, so dass Flugobjekte wie Flugzeuge und Hubschrauber Kollisionen vermeiden können. Hierbei kann vorgesehen sein, die Warnlichter der Hindernisbefeuerung nur dann zu aktivieren, wenn sich ein Flugobjekt der Windenergieanlage kritisch nähert. So können Lichtemissionen, die Anwohner in der Nähe der Windenergieanlage beeinträchtigen können, gemindert werden. Zum anderen können auf diese Weise gesetzliche Vorgaben der Luftverkehrssicherheit eingehalten werden, da nur die für den jeweiligen Flugobjektführer relevanten Hinderniskennzeichnungen aktiv sind.

Bei einer radargesteuerten Hindernisbefeuerung wird zwischen Aktiv- und Passivradar unterschieden. Beides sind sogenannte Primärradare. Beim Aktivradar werden von Antennen im Windpark mit Windenergieanlagen elektromagnetische Impulse erzeugt, die an Flugobjekten reflektiert und mit Hilfe von Detektoren erfasst werden. Hierdurch können Rückschlüsse auf die Flugroute des Flugobjekts gezogen werden, um die Hindernisbefeuerung bedarfsgerecht zu steuern. Das Passivradar wertet demgegenüber den Dopplereffekt und die Reflexionen kontinuierlich bestehender elektromagnetischer Wellen an Luftfahrzeugen aus.

Neben dem Primärradar besteht die Möglichkeit des Einsatzes eines Sekundärradars. Hierbei empfängt ein im Windpark installierter Sensor Transpondersignale, die von Flugzeugen und Hubschraubern ausgesendet werden. Die Transpondersignale können Informationen über die momentane Flughöhe und Position des Flugobjekts umfassen. In Abhängigkeit von den empfangenen Transpondersignalen wird dann die Hindernisbefeuerung bedarfsgerecht gesteuert, beispielsweise derart, dass die Warnlichter nur dann eingeschaltet werden, wenn das Transpondersignal eine Flughöhe unterhalb eines vorgegebenen Schwellwerts und eine Position innerhalb einer definierten Entfernung anzeigt. Anderenfalls können die Warnlichter der Hindernisbefeuerung ausgeschaltet werden oder bleiben.

Das Dokument DE 20 2019 101 060 U1 offenbart eine Vorrichtung zur Steuerung der Lichtkennzeichnung von Windenergieanlagen mit einem Empfangsgerät für Transpondersignale von Mode-S Transpondern, wobei das Empfangsgerät funktional mit mindestens einer Steuervorrichtung zur Auswertung der Daten des Empfangsgeräts verbunden ist, wobei die Steuervorrichtung mindestens einen Prozessor, mindestens einen Speicher und mindestens einen Ausgang aufweist, um Steuersignale zum Aktivieren und / oder Deaktivieren mindestens einer Befeuerungsanlage ausgeben zu können, wobei als Empfangsgerät ein auf DVB-T-Technik basierendes Modul dient.

In dem Dokument US 7 355 522 B2 ist ein Warnsystem für eine Windkraftanlage eines Windparks offenbart.

Dokument DE 10 2017 127 168 A1 betrifft eine Schutzvorrichtung zum Schutz von Flugobjekten gegenüber wenigstens einer Windenergieanlage mit wenigstens einer Bilderfassungseinheit, welche ausgebildet ist, die Umgebung wenigstens einer Windenergieanlage zumindest abschnittsweise zu erfassen, wobei die Schutzvorrichtung ausgebildet ist, wenigstens ein Flugobjekt in einem erfassten Bild der Bilderfassungseinheit zu erkennen, und mit wenigstens einer Entfernungsmessungseinheit, welche ausgebildet ist, einen Abstand (A) zu einem erkannten Flugobjekt zu erfassen, wobei die Schutzvorrichtung ferner ausgebildet ist, aus dem erfassten Abstand (A) des erkannten Flugobjekts zur Entfernungsmessungseinheit einen Abstand (B) des erkannten Flugobjekts zur Windenergieanlage zu bestimmen, wobei die Schutzvorrichtung ferner ausgebildet ist, zu erkennen, ob sich das erkannte Flugobjekt innerhalb eines ersten vorbestimmten Abstands (C) zur Windenergieanlage befindet oder nicht, wobei die Schutzvorrichtung ferner ausgebildet ist, in Reaktion auf ein innerhalb des ersten vorbestimmten Abstands (C) zur Windenergieanlage erkanntes Flugobjekt wenigstens ein Signal zur Beeinflussung des Betriebs wenigstens der Windenergieanlage auszugeben.

### Zusammenfassung

Aufgabe der Erfindung ist es, eine Anordnung zum Steuern einer bedarfsgerechten Hindernisbefeuerung einer Windenergieanlage sowie eine Windenergieanlage anzugeben, die einen flexiblen Einsatz für die Hindernisbefeuerung bei unterschiedlichen Bedingungen in Windparks mit Windenergieanlagen ermöglichen, insbesondere auch im Zusammenhang mit der Nachrüstung oder der Erneuerung einer Hindernisbefeuerung einer Windenergieanlage.

Zur Lösung ist eine Anordnung zum Steuern einer bedarfsgerechten Hindernisbefeuerung einer Windenergieanlage nach dem unabhängigen Anspruch 1 geschaffen. Weiterhin ist eine Windenergieanlage nach Anspruch 13 vorgesehen. Ausgestaltungen sind Gegenstand abhängiger Unteransprüche.

Nach einem Aspekt ist eine Anordnung zum Steuern einer bedarfsgerechten Hindernisbefeuerung einer Windenergieanlage geschaffen, die Folgendes aufweist: einen Schaltschrank, der eingerichtet ist, im Außenbereich an einem Maschinenhaus einer Windenergieanlage angeordnet zu werden, und ein im Außenbereich nutzbares Schaltschrankgehäuse aufweist; eine erste Antenneneinrichtung, die an dem Schaltschrankgehäuse angeordnet ist; eine erste Empfangseinrichtung, die der ersten Antenneneinrichtung zugeordnet, in dem Schaltschrankgehäuse angeordnet und eingerichtet ist, über die erste Antenneneinrichtung von einem Flugobjekt Transpondersignale zu empfangen; eine erste Steuereinrichtung, die mit der ersten Empfangseinrichtung verbunden und eingerichtet ist, die Transpondersignale von der ersten Empfangseinrichtung zu empfangen und in Abhängigkeit hiervon erste Steuersignale für eine Hindernisbefeuerung der Windenergieanlage bereitzustellen und zu einer Schalteinrichtung der Hindernisbefeuerung abzugeben, mit der eine erste Signalisierungseinrichtung der Hindernisbefeuerung in Abhängigkeit von den Steuersignalen geschaltet wird; eine zweite Antenneneinrichtung, die an dem Schaltschrankgehäuse angeordnet ist; und eine Transceivereinrichtung, die der zweiten Antenneneinrichtung zugeordnet, in dem Schaltschrankgehäuse angeordnet und eingerichtet ist, über die zweite Antenneneinrichtung, getrennt von den Transpondersignalen, Datenkommunikationssignale zu senden und zu empfangen.

Weiterhin ist eine Windenergieanlage mit solcher Anordnung zum Steuern einer bedarfsgerechten Hindernisbefeuerung vorgesehen.

Die Ausgestaltung des Schaltschranks für die Nutzung im Außenbereich der Windenergieanlage am Maschinenhaus, welches auch als Gondel bezeichnet wird, ermöglicht es, Komponenten, Module oder Einheiten zum Betreiben der Hindernisbefeuerung losgelöst von dem inneren Aufbau des Maschinenhauses selbst anwendungsgerecht für den Betrieb bei unterschiedlich Einsatzbedingungen bereitzustellen. Im Unterschied zu bekannten Windenergieanlagen können die Komponenten, Module oder Einheiten zum Schalten der Hindernisbefeuerung so außerhalb des Innenraums der Windenergieanlage angeordnet werden. Im Maschinenhaus von Windenergieanlagen ist der Platz regelmäßig sehr begrenzt. Das Anordnen in dem Schaltschrank im Außenbereich der Windenergieanlage trägt somit dazu bei, im Maschinenhaus der Windenergieanlage Platz einzusparen oder für andere Komponenten oder Module der Windenergieanlage bereitzustellen. Auch entfällt so das Anordnen der Antenneneinrichtungen sowie der zugeordneten Empfangseinrichtungen sowie zugehöriger Kabel direkt am oder im Maschinenhaus, wodurch elektromagnetische Störfelder im Umfeld der im Maschinenhaus der Windenergieanlage üblicherweise angeordneten Generatoren, Transformatoren sowie Umrichter entfallen. Die Montage des Schaltschranks außerhalb am Maschinenhaus ermöglicht eine leichte Nachrüstung und Wartung der Schaltung der Hindernisbefeuerung.

In einer Ausgestaltung kann der Schaltschrank einer einzelnen Windenergieanlage zugeordnet sein, also (nur) Komponenten, Module oder Einheiten zum Schalten der Hindernisbefeuerung für die eine Windenergieanlage aufnehmen. Alternativ können in einem (gemeinsamen) Schaltschrank Komponenten, Module oder Einheiten zum Schalten der Hindernisbefeuerung für mehrere Windenergieanlagen angeordnet sein, zum Beispiel zwei oder drei unmittelbar benachbart zueinander angeordnete Windenergieanlagen.

Das Schaltschrankgehäuse kann ein Metallgehäuse sein.

Das Übertragen der ersten Steuersignale von der ersten Steuereinrichtung an die Schalteinrichtung der Hindernisbefeuerung kann eine kabellose und / oder eine kabelgebundene Datenübertragung umfassen.

Die erste Antenneneinrichtung kann eingerichtet sein, Transpondersignale von einem Flugobjekt zu empfangen. Die Transpondersignale können Informationen zur Flughöhe und / oder Flugposition des Flugobjekts umfassen.

Die zweite Antenneneinrichtung, die für eine Datenkommunikation eingerichtet ist, kann beispielsweise einen GPS-Antenne oder eine Kommunikationsantenne umfassen. Auch Kombinationen von mehreren Antennen für die Datenkommunikation können vorgesehen sein.

Die erste Steuereinrichtung kann in dem Schaltschrankgehäuse angeordnet sein. Bei dieser Ausführungsform ist nicht nur die erste Empfangseinrichtung, welche der ersten Antenneneinrichtung zugeordnet ist, sondern zusätzlich auch die erste Steuereinrichtung im Schaltschrankgehäuse aufgenommen, wodurch der Platzbedarf in der Windenergieanlage selbst, beispielsweise im Maschinenhaus, weiter minimiert wird.

Die Schalteinrichtung der Hindernisbefeuerung kann zumindest teilweise in dem Schaltschrankgehäuse gebildet sein. Die Schalteinrichtung der Hindernisbefeuerung kann ganz oder teilweise in dem Schaltschrankgehäuse angeordnet sein. Weist die Schalteinrichtung zum Schalten der ersten Signalisierungseinrichtung der Hindernisbefeuerung mehrere Module oder Komponenten auf, können diese teilweise im Schaltschrankgehäuse und teilweise in der Windenergieanlage selbst angeordnet sein, insbesondere im Maschinenhaus. Das teilweise Ausbilden der Schalteinrichtung der Hindernisbefeuerung in dem Schaltschrankgehäuse mindert nicht Platzbedarf für die Elemente der Hindernisbefeuerung in der Windenergieanlage selbst.

Die Schalteinrichtung der Hindernisbefeuerung kann zumindest teilweise an der Windenergieanlage gebildet sein. Bei dieser Ausgestaltung ist die Schalteinrichtung der Hindernisbefeuerung ganz oder teilweise in der Windenergieanlage selbst angeordnet, beispielsweise im Maschinenhaus.

An dem Schaltschrankgehäuse kann eine gedichtete Kabelwanddurchführung gebildet sein. Eine Kabelführung zwischen den Antenneneinrichtungen, die im Außenbereich des Schaltschrankgehäuses angeordnet sein können, beispielsweise mittels Montage auf einer äußeren Oberfläche des Schaltschrankgehäuses, und der ersten Empfangseinrichtung sowie der Transceivereinrichtung kann eine gedichtete Kabelwanddurchführung am Schaltschrankgehäuse umfassen, die beispielsweise unter Verwendung von Hohlschrauben oder dergleichen ausgeführt sein kann. Auf diese Weise werden die Kabel vom außen nach innen gedichtet geführt.

Vergleichbar kann am Maschinenhaus eine gedichtete Kabelwanddurchführung vorgesehen sein, um zum Beispiel Kabel aus dem Schaltschrank gedichtet ins Maschinenhaus einzuführen.

Eine kabelgebundene Verbindung, die durch die gedichtete Kabelwanddurchführung am Schaltschrankgehäuse hindurchzuführen ist, um die Elemente oder Komponenten, die im oder am Schaltschrank angeordnet sind, mit Komponenten oder Elementen in der Windenergieanlage selbst zu verbinden, kann auf höchstens zwei oder nur ein einziges Kabel beschränkt sein. Beispielsweise können eine Kabelverbindung zur Energieversorgung sowie eine Kabelverbindung für das Übertragen von Daten (Datenkabel) vorgesehen sein. Auf diese Weise können die Elemente oder Komponenten im Schaltschrank an die Energieversorgung der Windenergieanlage angeschlossen werden. Bei der Ausführung der Kabelverbindung mit nur einem einzigen Kabel können Energie und Daten über dieses Kabel übertragen werden. Für die Übertragung von Datensignalen kann zum Beispiel die Powerline-Technologie genutzt werden, welche das Übertragen von Datensignalen über Energieversorgungskabel ermöglicht.

Eine schaltschrankseitige Erdungseinrichtung kann mit einer Erdungseinrichtung der Windenergieanlage verbunden sein.

An dem Schaltschrankgehäuse kann außenseitig eine zweite Signalisierungseinrichtung der Hindernisbefeuerung der Windenergieanlage angeordnet sein.

Die zweite Signalisierungseinrichtung der Hindernisbefeuerung der Windenergieanlage kann voneinander beabstandete Signaleinrichtungen aufweisen. Die voneinander beabstandeten Signaleinrichtungen können zum Beispiel in entgegengesetzten Endbereichen des Schaltschrankgehäuses an oder auf diesem angeordnet sein. Die Signaleinrichtungen können eingerichtet sein, optische Signale abzugeben, beispielsweise im nicht sichtbaren Wellenlängenbereich. So kann zum Beispiel eine Infrarotlicht abgebende Signaleinrichtung vorgesehen sein.

Die erste und die zweite Antenneneinrichtung können an dem Schaltschrankgehäuse in einem Bereich zwischen den beabstandeten Signaleinrichtungen angeordnet sein. Sind die voneinander beabstandeten Signaleinrichtungen zum Beispiel in gegenüberliegenden End- oder Eckbereichen des Schaltschrankgehäuses angeordnet, können die Antenneneinrichtungen hier zwischen im Bereich einer Deck- oder Dachfläche des Schaltschrankgehäuses angeordnet sein. Neben der ersten und der zweiten Antenneneinrichtung können weitere Antenneneinrichtungen im Bereich zwischen den beabstandeten Signaleinrichtungen angeordnet sein, in einer Ausgestaltung alle am Schaltschrankgehäuse angeordneten Antenneneinrichtungen.

Die erste Signalisierungseinrichtung und die zweite Signalisierungseinrichtung der Hindernisbefeuerung der Windenergieanlage können unabhängig voneinander schaltbar sein Die beiden Signalisierungseinrichtungen, die der Hindernisbefeuerung der Windenergieanlagen zugeordnet sind, können auf diese Weise getrennt gesteuert werden, also insbesondere unabhängig voneinander ein- und ausgeschaltet werden. Hierbei kann vorgesehen sein, dass die zweite Signalisierungseinrichtung der Hindernisbefeuerung zu vorbestimmten Tageszeiten, beispielsweise nachts oder bei schlechter Sicht, dauerhaft eingeschaltet ist, um so die Windenergieanlage als Hindernis zu kennzeichnen.

Die erste Signalisierungseinrichtung der Hindernisbefeuerung der Windenergieanlage kann eine optische Signaleinrichtung aufweisen, die eingerichtet ist, optische Signale im sichtbaren Wellenlängenbereich abzugeben. Hierbei kann vorgesehen sein, dass die Hindernisbefeuerung der Windenergieanlage ausschließlich mit der optischen Signaleinrichtung ausgestattet ist, die optische Signale im sichtbaren Wellenlängenbereich abgibt.

Die zweite Signalisierungseinrichtung der Hindernisbefeuerung der Windenergieanlage kann eine optische Signaleinrichtung aufweisen, die eingerichtet ist, optische Signale im nichtsichtbaren Wellenlängenbereich abzugeben. Bei diesem Ausführungsbeispiel verfügt die Hindernisbefeuerung der Windenergieanlage über eine Signalisierung, bei der die optische Signaleinrichtung Signale im nichtsichtbaren Wellenlängenbereich abgibt, beispielsweise mittels Infrarotlichtsignalen.

Die zweite Signalisierungseinrichtung der Hindernisbefeuerung der Windenergieanlage kann unabhängig von der ersten Signalisierungseinrichtung der Hindernisbefeuerung der Windenergieanlage steuerbar sein und hierzu der zweiten Signalisierungseinrichtung zugeordnete Steuersignale empfangen. Hierfür kann eine zweite Steuereinrichtung vorgesehen sein, die wahlweise in dem Schaltschrankgehäuse aufgenommen ist und Steuersignale zum Ein- / Ausschalten zum Beispiel der optischen Signaleinrichtung der zweiten Signalisierungseinrichtung der Hindernisbefeuerung der Windenergieanlage bereitstellt.

In alternativen Ausgestaltungen können die erste und / oder die zweite Signalisierungseinrichtung, die unabhängig voneinander schaltbar sein können, Signaleinrichtungen, insbesondere optische Signaleinrichtungen, außen an dem Schaltschrankgehäuse selbst und / oder an anderer Stelle an der Windenergieanlage in deren Außenbereich aufweisen.

Die vorangehend im Zusammenhang mit der Anordnung zum Steuern der bedarfsgerechten Hindernisbefeuerung erläuterten Ausgestaltungen können in Verbindung mit der Windenergieanlage, die eine solche Anordnung aufweist, entsprechend vorgesehen sein. Hierbei kann in einer Ausgestaltung der Schaltschrank am Maschinenhaus außenseitig montiert sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung mit einer Windenergieanlage und einem im Außenbereich der Windenergieanlage am Maschinenhaus angeordneten Schaltschrank;
- Fig. 2: eine schematische Darstellung eines Schaltschranks für den Außenbereich einer Windenergieanlage;
- Fig. 3: eine schematische Darstellung des Schaltschranks aus Fig. 2 mit hierin aufgenommenen Funktionskomponenten;
- Fig. 4: eine schematische Darstellung von Funktionskomponenten einer Windenergieanlage mit Hindernisbefeuerung;
- Fig. 5: eine schematische Darstellung für Funktionskomponenten für eine Hindernisbefeuerung der Windenergieanlage sowie des Schaltschranks und
- Fig. 6: eine schematische Darstellung einer anderen Ausführungsform für eine bedarfsgerechte Hindernisbefeuerung der Windenergieanlage.

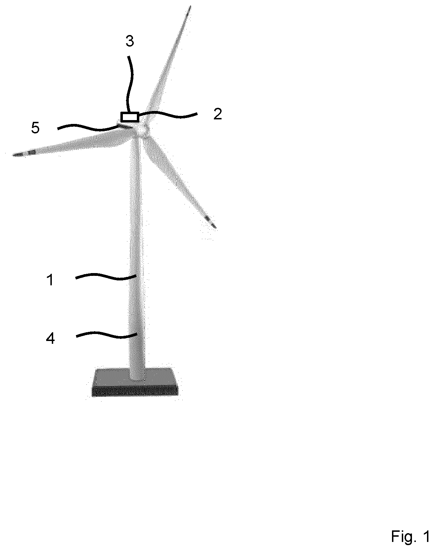

Fig. 1 zeigt eine schematische Darstellung einer Anordnung mit einer Windenergieanlage 1 und einem der Windenergieanlage 1 zugeordneten Schaltschrank 2 mit einem Schaltschrankgehäuse 3 im Außenbereich der Windenergieanlage 1. Der Schaltschrank 2 ist außerhalb der Windenergieanlage 1 angeordnet, also insbesondere getrennt von einem Turmgehäuse 4 und einem Maschinenhaus 5 der Windenergieanlage 1. Der Schaltschrank 2, welcher im gezeigten Ausführungsbeispiel außen am Maschinehaus 5 angeordnet ist, ermöglicht es, hierin Funktionskomponenten, -elemente oder -module einer Hindernisbefeuerung der Windenergieanlage 1 aufzunehmen, so dass Platzbedarf für diese Funktionskomponenten in der Windenergieanlage 1 selbst entfällt, insbesondere im Maschinenhaus 5.

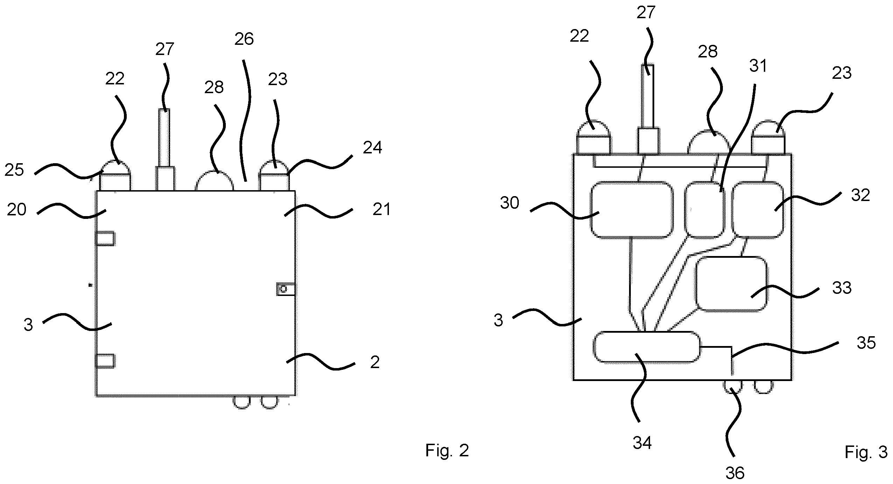

Die Fig. 2 und 3 zeigen schematische Darstellungen für Ausführungsformen des Schaltschranks 2. Gemäß Fig. 2 sind in gegenüberliegenden Eckbereichen 20, 21 des Schaltschrankgehäuses 3 optische Signaleinrichtungen 22, 23 einer Signalisierungseinrichtung 24 angeordnet. Die Signalisierungseinrichtung 24 ist Teil einer Hindernisbefeuerung 25 der Windenergieanlage 1. Es kann vorgesehen sein, dass die optischen Signaleinrichtungen 22, 23 jeweils Lichtsignale im nicht sichtbaren Wellenbereich abgeben, beispielsweise Infrarotlicht.

In einem Bereich 26 zwischen den optischen Signaleinrichtungen 22, 23 sind eine erste Antenneneinrichtung 27 sowie eine zweite Antenneneinrichtung 28 angeordnet. Die erste Antenneneinrichtung 27 ist konfiguriert, sogenannte Transpondersignale von Flugobjekten (Luftfahrzeugen, nicht dargestellt) zu empfangen. Derartige Transpondersignale werden von Luftfahrzeugen regelmäßig ausgesandt und können Höheninformationen betreffend eine aktuelle Flughöhe sowie Positionsinformation des Flugobjektes umfassen. Die erste Antenneneinrichtung 27 und / oder die zweite Antenneneinrichtung 28 können am Schaltschrankgehäuse 3 auch an einer Seitenwand angeordnet sein.

Die zweite Antenneneinrichtung 28 ist ausgebildet für eine Datenkommunikation, um elektronische Datensignale zu empfangen und zu senden.

Gemäß der schematischen Darstellung in Fig. 3 sind in dem Schaltschrankgehäuse 3 eine erste Empfangseinrichtung 30, die der ersten Antenneneinrichtung 27 zugeordnet ist, sowie eine Transceivereinrichtung 31 (Sende- / Empfangseinrichtung) aufgenommen, die der zweiten Antenneneinrichtung 28 zugeordnet ist. Mit Hilfe der ersten Empfangseinrichtung 30 werden über die erste Antenneneinrichtung 27 die Transpondersignale der Flugobjekte empfangen, insbesondere Transpondersignale mit Informationen zur Flughöhe. Die Transceivereinrichtung 31 ist eingerichtet, über die zweite Antenneneinrichtung 28 Signale zur Datenkommunikation zu senden und zu empfangen. Beispielsweise kann die Transceivereinrichtung 31 mit der zweiten Antenneneinrichtung 28 eingerichtet sein, Mobilfunksignale, WLAN-Signale und / oder GPS-Signale für eine Datenkommunikation zu empfangen und zu senden.

Gemäß dem Ausführungsbeispiel in Fig. 3 ist in dem Schaltschrankgehäuse 3 weiterhin eine erste Schalteinrichtung 32 angeordnet, die den optischen Signaleinrichtungen 22, 23 zugeordnet ist, um diese in Abhängigkeit von Steuersignalen, die von einer ersten Steuereinrichtung 33 zum Steuern der Hindernisbefeuerung der Windenergieanlage 1 empfangen werden, zu schalten, also ein- und auszuschalten.

Bei dem Ausführungsbeispiel in Fig. 3 ist eine Schnittstelleneinrichtung 34 im Schaltschrank 3 vorgesehen, um zu übertragende Datensignale über ein Datenkabel 35 zu senden und zu empfangen. Das Datenkabel 35 ist über eine dichtende Kabelwanddurchführung 36 aus dem Schaltschrankgehäuse 3 herausgeführt, um mit Elementen oder Komponenten der Windenergieanlage 1 verbunden zu werden, die an oder in der Windenergieanlage 1 angeordnet sind. Alternativ oder ergänzend kann über die dichtende Kabelwanddurchführung 36 ein Energieversorgungskabel geführt sein, um eine Energieversorgung der Komponenten oder Elemente in dem Schaltschrank 2 über einen Anschluss an der Windenergieanlage 1 zu versorgen.

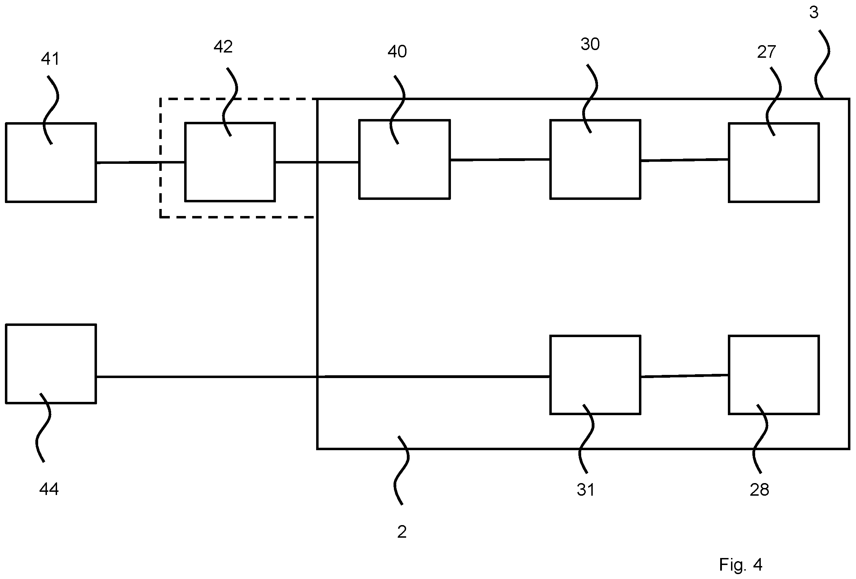

Fig. 4 zeigt eine schematische Darstellung von Funktionskomponenten für eine Hindernisbefeuerung der Windenergieanlage 1 sowie die Datenkommunikation.

Gemäß Fig. 4 ist die erste Antenneneinrichtung 27, die eingerichtet ist, Transpondersignale von Flugobjekten zu empfangen, mit der ersten Empfangseinrichtung 30 verbunden, die ihrerseits mit einer Steuereinrichtung 40 in Verbindung steht. Die Steuereinrichtung 40 ist eingerichtet, die empfangenen Transpondersignale zu verarbeiten und in Abhängigkeit hiervon Steuersignale für eine erste Signalisierungseinrichtung 41 der Hindernisbefeuerung der Windenergieanlage 1 bereitzustellen. Die erste Signalisierungseinrichtung 41 kann außen an verschiedenen Elementen der Windenergieanlage 1 gebildet sein, zum Beispiel am Maschinenhaus 5 und / oder am Schaltschrankgehäuse 3. Die Steuersignale werden in einer Schalteinrichtung 42 verarbeitet, um die erste Signalisierungseinrichtung 41 den Steuersignalen entsprechend zu schalten. Auf diese Weise wird die erste Signalisierungseinrichtung 41 der Hindernisbefeuerung der Windenergieanlage 1 in Abhängigkeit von den Transpondersignalen gesteuert. Die erste Signalisierungseinrichtung 41 kann eingerichtet sein, optische Signale im sichtbaren Wellenlängenbereich abzugeben.

Gemäß Fig. 4 ist die zweite Antenneneinrichtung 28 mit der Transceivereinrichtung 31 verbunden, welche ihrerseits mit einer Steuereinrichtung 44 verbunden ist, wahlweise auch mit der Steuereinrichtung 40. Über die Transceivereinrichtung 31 und die zweite Antenneneinrichtung 28 kann eine Fernüberwachungseinheit Daten mit der Steuereinrichtung 44 und / oder der Steuereinrichtung 40 austauschen, und somit zum Beispiel aus der ferne Befehle zum Ein- und Ausschalten übermitteln oder regelmäßig Statusinformationen an eine Fernüberwachungseinheit übersenden.

Gemäß der schematischen Darstellung in Fig. 4 sind die erste Empfangseinrichtung 30 sowie die zugeordnete erste Antenneneinrichtung 27 und die Transceivereinrichtung 31 sowie die zugeordnete zweite Antenneneinrichtung 28 in oder an dem Schaltschrankgehäuse 3 im Außenbereich der Windenergieanlage 1 angeordnet. Bei dem gezeigten Ausführungsbeispiel ist auch die Steuereinrichtung 40 in dem Schaltschrankgehäuse 3 aufgenommen. Wahlweise kann die Schalteinrichtung 42 ganz oder teilweise in dem Schaltschrankgehäuse 3 oder der Windenergieanlage 1 selbst aufgenommen sein.

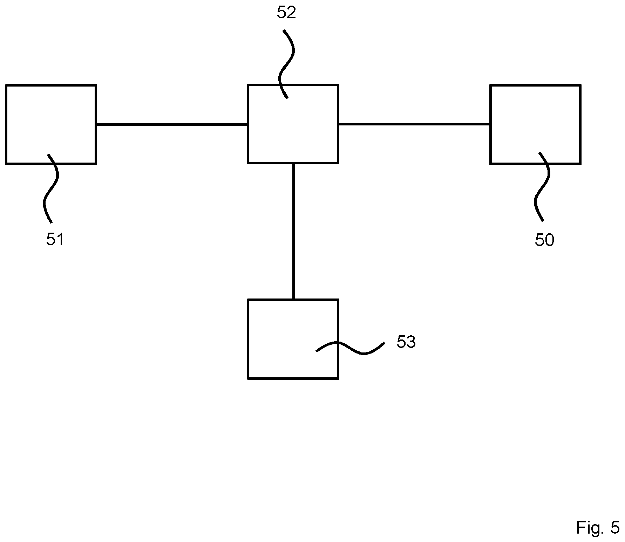

Fig. 5 zeigt eine schematische Darstellung einer weiteren Ausführung, die eine (erste) schaltschrankseitige Signalisierungseinrichtung 50 am Schaltschrankgehäuse 3 sowie eine (zweite) anlagenseitige Signalisierungseinrichtung 51 an der Windenergieanlage 1 aufweist. Den Signalisierungseinrichtungen 50, 51, die in dem Ausführungsbeispiel gemeinsam Teil der Befeuerung der Windenergieanlage 1 sind, ist eine Schalteinrichtung 52 zugeordnet, mit der die Signalisierungseinrichtungen 50, 51 gemeinsam oder getrennt geschaltet werden. Hierzu empfängt die Schalteinrichtung 52 Steuersignale von einer Steuereinrichtung 53 der Hindernisbefeuerung. Die Signalisierungseinrichtungen 50, 51 können eingerichtet sein, optische Signale zur Kennzeichnung abzugeben, insbesondere optische Signale im nichtsichtbaren Wellenlängenbereich, zum Beispiel Infrarotlicht. Teil der schaltschrankseitigen Signalisierungseinrichtung 50 können die Signaleinrichtungen 22, 23 auf oder an dem Schaltschrankgehäuse 3 sein (vgl. Fig. 3).

Es kann vorgesehen sein, dass die Windenergieanlage 1 zusätzlich mit einem Primärradarsystem ausgestattet ist, um eine zusätzliche Absicherung (Rückfallebene) für die Steuerung der Hindernisbefeuerung der Windenergieanlage 1 bereitzustellen, zum Beispiel für den Fall, dass die vorangehend erläuterte bedarfsgerechte Steuerung auf Basis der empfangenen Transpondersignale von den Flugobjekte versagt oder gestört ist, zum Beispiel bei Ausfall des Transpondersignals. Aber auch ein paralleler Betrieb von Steuerung basierend auf den Transpondersignalen und Primärradarsystem zum Kennzeichnen der Windenergieanlage 1 kann vorgesehen sein. Das Primärradarsystem ist der (einzelnen) Windenergieanlage 1 zugeordnet und benachbart zu dieser in deren Außenbereich angeordnet.

Es ist vorgesehen, das Primärradarsystem nicht an einem zentralen Ort zu installieren und die empfangenen Daten über Netzwerke zu verteilen, sondern es ist in direkter Nähe zur ersten Empfangseinrichtung 30 des transponderbasierten Systems installiert, um die Daten dieses Systems durch eine Rückfalleben zu unterstützen.

Die Steuerung der Hindernisbefeuerung der Windenergieanlage 1 in Abhängigkeit von den Transpondersignalen bildet ein primäres System. Ein sekundäres System (Rückfallebene) kann von dem Primärradar gebildet sein. Beide Systeme können gleichzeitig betrieben werden, um die Aufgabe der sicheren und bedarfsgerechten Hindernisbefeuerung zu optimieren. Wenn das Primärsystem ausfällt, kann ein Fail-Safe-Status eingenommen werden. Wenn das Sekundärsystem ausfällt, ist dies nicht zwingend erforderlich.

Eine funktionstechnische Verknüpfung der beiden Systeme kann als eine "ODER"-Verknüpfung realisiert sein, derart, dass das primäre System keine Kenntnis davon hat, in welchem Zustand sich das sekundäre System befindet. Dies ermöglicht es, das primäre System einer Baumusterprüfung zu unterziehen und dann wahlweise alleinstehend oder mit dem sekundären System zu betreiben.

Es handelt sich bei dem Primärradarsystem nicht um ein vollwertiges BNK-System (BNK - bedarfsgerechte Kennzeichnung), welches auch alleinstehend eine Baumusterprüfung erhalten könnte, sondern es handelt sich um ein stark vereinfachtes System. Das Primärradarsystem kann zum Beispiel einem maritimen Schiffsradar entsprechend ausgeführt sein, welches nur in einem geringen vertikalen Winkel rundum vorausschaut. Das Primärradarsystem kann in einer Ausführungsform einen vertikalen Öffnungswinkel von höchstens etwa 30° aufweist und eine Reichweite von höchstens etwa 25 km gegen ein Radarziel mit einem Radarquerschnitt von etwa 1 qm aufweisen.

Dieses Primärradarsystem würde bei einem Transponderausfall ein sehr nahes Luftfahrzeug, welches sich auf Kollisionskurs zu Windenergieanlage 1 befindet, mittels Aktivieren der Hindernisbefeuerung warnen. In vielen Fällen könnte die Kollision dadurch verhindert werden.

Das primäre und das sekundäre System bilden zusammen die Hindernisbefeuerung der Windenergieanlage 1. Nur das primäre System erfüllt alle Anforderungen an eine sichere Luftraumüberwachung erfüllt, allerdings abhängig vom Betrieb externer, nicht überwachbarer Komponenten. Das sekundäre System erfüllt hingegen nur stark reduzierte Anforderungen an eine sichere Luftraumüberwachung und ist auf eine "Warnung im letzten Moment" abgestimmt. Die beiden Systeme sind unmittelbar nebeneinander und in unmittelbarer Nähe zu dem abzusichernden Luftfahrthindernis installiert. Das das primäre System kann ein transponderbasiertes System sein, und das sekundäre System kann ein Primärradar sein.

Das sekundäre System (Rückfallebene) kann alternativ zur Ausführung als Primärradar mit einem Funkempfänger gebildet sein, welcher passiv Notfallfrequenzen im Flugfunk mithört. Sobald sich auf diesen Bändern ein Signal, ggf. unter Berücksichtigung der Signalstärke, empfangen lässt, würde die Befeuerung der Windenergieanlage 1 für einen definierten Zeitraum aktiviert. Dies berücksichtigt, dass der von einem ausgefallenen Transponder betroffene Pilot eines Luftfahrzeugs dies bemerkt und über diese Notfallfrequenzen kommuniziert oder nur zu diesem Zweck einen entsprechenden Funkspruch absetzt. Weiterhin wäre es nützlich, wenn bei jedwedem Notfall-Funkverkehr die Befeuerung von Windenergieanlage in einer bestimmten Region aktiviert wird.

Die Steuerung der Hindernisbefeuerung mittels Funkempfänger kann auch ergänzend zum Primärradar für das sekundäre System (Rückfallebene) zum Einsatz kommen.

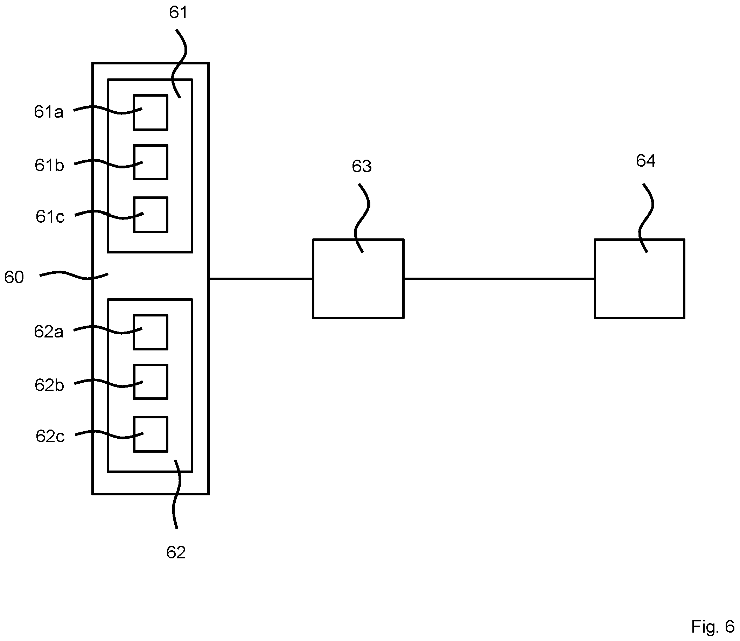

Fig. 6 zeigt eine schematische Darstellung einer anderen Ausführungsform für eine bedarfsgesteuerte Hindernisbefeuerung der Windenergieanlage 1, die mit den vorangehend erläuterten Ausführungsbeispielen oder Komponenten oder Aspekten davon kombinierbar ist. Hierbei ist vorgesehen, in einer Steuereinrichtung 60 der Hindernisbefeuerung ein erstes und ein zweites Steuerteilsystem 61, 62 bereitzustellen. Die Steuereinrichtung 60 ist mit einer Schalteinrichtung 63 verbunden, die ihrerseits mit einer Signalisierungseinrichtung 64 verbunden ist, um diese in Abhängigkeit von Steuersignalen zu schalten, die von der Steuereinrichtung 60 betriebsabhängig empfangen werden.

Das erste Steuerteilsystem 61 weist ein Sekundärradarsystem 61a, eine erste Antenneneinrichtung 61b zum Empfangen der Transpondersignale und eine erste Empfangseinrichtung 61c auf, die der ersten Antenneneinrichtung 61b zugeordnet und eingerichtet ist, über die erste Antenneneinrichtung 61b als erste Empfangssignale Transpondersignale von Flugobjekten zu empfangen.

Das zweite Steuerteilsystem 62, welches von dem ersten Steuerteilsystem 61 verschieden ist, weist mindestens Primärradarsystem oder mindestens ein Funkempfängersystem 62a, eine zweite Antenneneinrichtung 62b zum Empfangen der Primärradar- und / oder Funksignale und eine zweite Empfangseinrichtung 62c auf, die der zweiten Antenneneinrichtung 62b zugeordnet und eingerichtet ist, über die zweite Antenneneinrichtung 62b als zweite Empfangssignale Primärradar- und / oder Funksignale der Flugobjekte zu empfangen.

Die Windenergieanlage 1 ist so zusätzlich mit einem Primärradarsystem / Funkempfängersystem ausgestattet ist, um eine zusätzliche Absicherung (Rückfallebene) für die Steuerung der Hindernisbefeuerung der Windenergieanlage 1 bereitzustellen, zum Beispiel für den Fall, dass die vorangehend erläuterte bedarfsgerechte Steuerung auf Basis der empfangenen Transpondersignale von den Flugobjekten versagt oder gestört ist, zum Beispiel bei Ausfall des Transpondersignals. Aber auch ein paralleler Betrieb der Steuerung basierend auf den Transpondersignalen und Primärradarsystem / Funkempfängersystem zum Kennzeichnen der Windenergieanlage 1 kann vorgesehen sein. Das Primärradarsystem ist der (einzelnen) Windenergieanlage 1 zugeordnet und benachbart zu dieser in deren Außenbereich angeordnet.

Die Steuereinrichtung 60 eingerichtet ist, in einer Normalbetriebsart, wenn zumindest die ersten Empfangssignale in der Steuereinrichtung mittels des ersten Steuerteilsystem 61 empfangen werden, die Steuersignale in Abhängigkeit von zumindest den ersten Empfangssignalen bereitzustellen und an die Schalteinrichtung 63 zu geben. In der Normalbetriebsart können parallel und ergänzend zu den ersten Empfangssignalen (Transpondersignale) die zweiten Empfangssignale (Primärradar- und / oder Funksignale) empfangen werden und in der Steuereinrichtung 60 zum Steuern der Signalisierungseinrichtung 64 ausgewertet werden. In einer Rückfallbetriebsart, wenn (nur) die zweiten Empfangssignale nicht aber die ersten Empfangssignale in der Steuereinrichtung 60 empfangen werden, stellt die Steuereinrichtung 60 die Steuersignale in Abhängigkeit von den zweiten Empfangssignalen bereit und gibt diese an die Schalteinrichtung 63. Die Hindernisbefeuerung wird dann allein auf Basis der zweiten Empfangssignale (Primärradar- und / oder Funksignale) gesteuerte, da die ersten Empfangssignalen (Transpondersignale) nicht empfangen werden, zum Beispiel wegen einer Störung. Im Fall eines aktiven Primärradarsystems erfolgt dem Empfang der zweiten Empfangssignale auf das vorherige Aussenden von Sendesignalen.

Es kann vorgesehen sein, das Primärradarsystem / Funkempfängersystem nicht an einem zentralen Ort zu installieren und die empfangenen Daten über Netzwerke zu verteilen, sondern in direkter Nähe zur ersten Antenneneinrichtung 61b des transponderbasierten Systems (erstes Steuerteilsystem 61) installiert, um die Daten dieses Systems durch eine Rückfallebene zu unterstützen.

Die Steuerung der Hindernisbefeuerung der Windenergieanlage 1 in Abhängigkeit von den Transpondersignalen bildet ein primäres System. Ein sekundäres System (Rückfallebene) wird bei dem Ausführungsbeispiel von dem Primärradarsystem / Funkempfängersystem gebildet sein. Beide Systeme können gleichzeitig betrieben werden, um die Aufgabe der sicheren und bedarfsgesteuerten Hindernisbefeuerung zu optimieren. Wenn das primäre System ausfällt, kann ein Fail-Safe-Status eingenommen werden. Wenn das sekundäre System ausfällt, ist dies nicht zwingend erforderlich. In einer möglichen Ausführungsform ist hierbei zwischen den beiden Systemen, also dem Sekundärradarsystem (Transponder basiert) und dem Primärradars- / Funkempfängersystem, eine ODER-Verknüpfung ausgebildet sein. Dann reagiert das sekundäre System (Rückfallebene - Primärradars- / Funkempfängersystem), welches zwar einen geringeren Erfassungsbereich hat, aber unempfindlich gegenüber Störungen der Transponder in Luftfahrzeugen ist, in jedem Fall. Es erfolgt dann möglicherweise eine spätere oder zeitversetzte Warnung (Signalisierung), aber es wird wenigstens reagiert. Somit kann auf ein "Fail" beim aussendenden Transponder regiert werden, und das System ist "Safe".

Eine funktionstechnische Verknüpfung der beiden Systeme, also des ersten und des zweiten Steuerteilsystems 61, 62, kann in der Steuereinrichtung 60 als eine "ODER"-Verknüpfung realisiert sein, derart, dass das primäre System keine Kenntnis davon hat, in welchem Zustand sich das sekundäre System befindet. Dies ermöglicht es, das primäre System einer Baumusterprüfung zu unterziehen und dann wahlweise alleinstehend oder mit dem sekundären System zu betreiben.

Es handelt sich bei dem Primärradarsystem des zweiten Steuerteilsystems 62 nicht um ein vollwertiges BNK-System (BNK - bedarfsgesteuerte Nachtkennzeichnung), welches auch alleinstehend eine Baumusterprüfung erhalten könnte, sondern um ein vereinfachtes System. Das Primärradarsystem kann zum Beispiel einem maritimen Schiffsradar entsprechend ausgeführt sein, welches nur in einem geringen vertikalen Winkel rundum vorausschaut. Das Primärradarsystem kann in einer Ausführungsform einen vertikalen Öffnungswinkel von höchstens etwa 30° aufweist und eine Reichweite von höchstens etwa 25 km gegen eine Radarziel mit einem Radarquerschnitt von mindesten etwa 1 qm aufweisen.

Das Primärradarsystem des zweiten Steuerteilsystems 62 würde bei einem Transponderausfall und einem hiermit verbundenen Wegfall der ersten Empfangssignale in dem ersten Steuerteilsystem 61 ein sehr nahes Luftfahrzeug, welches sich auf Kollisionskurs zu Windenergieanlage 1 befindet, mittels Aktivieren der Hindernisbefeuerung warnen. In vielen Fällen könnte die Kollision dadurch verhindert werden.

Das primäre und das sekundäre System bilden zusammen mit der Schalteinrichtung 63 und der Signalisierungseinrichtung 64 eine Hindernisbefeuerung der Windenergieanlage 1. Nur das primäre System erfüllt alle Anforderungen an eine sichere Luftraumüberwachung, allerdings abhängig vom Betrieb externer, nicht überwachbarer Komponenten (zum Beispiel dem Sender für Transpondersignale). Das sekundäre System erfüllt hingegen nur reduzierte Anforderungen an eine sichere Luftraumüberwachung und ist auf eine "Warnung im letzten Moment" abgestimmt. Die beiden Systeme können unmittelbar nebeneinander und in unmittelbarer räumlicher Nähe zu dem abzusichernden Luftfahrthindernis installiert sein.

Das sekundäre System (Rückfallebene) kann alternativ zur Ausführung als Primärradar mit einem Funkempfänger gebildet sein, welcher passiv Notfallfrequenzen im Flugfunk mithört. Sobald sich auf diesen Bändern ein Signal, ggf. unter Berücksichtigung der Signalstärke, empfangen lässt, würde die Befeuerung der Windenergieanlage 1 für einen definierten Zeitraum aktiviert. Dies berücksichtigt, dass der von einem ausgefallenen Transponder betroffene Pilot eines Luftfahrzeugs dies bemerkt und über diese Notfallfrequenzen kommuniziert oder nur zu diesem Zweck einen entsprechenden Funkspruch absetzt. Weiterhin wäre es nützlich, wenn bei jedwedem Notfall-Funkverkehr die Befeuerung von Windenergieanlage in einer bestimmten Region aktiviert wird.

Alternativ oder ergänzend zu den Notfallfrequenzen können auch andere Frequenzen, die keine Notfallfrequenzen sind, zu gleichem Zweck genutzt werden. So kann hierbei vorgesehen sein, eine Zuordnung zwischen Luftfahrthindernis und Frequenz herzustellen, wie dies als solches beim Luftverkehr zum Einsatz kommt, zum Beispiel bei abgelegenen Landeplätzen.

Die Steuerung der Hindernisbefeuerung mittels Funkempfänger kann auch ergänzend zum Primärradar für das sekundäre System (Rückfallebene) zum Einsatz kommen.

Es kann vorgesehen sein, mittels der Steuereinrichtung 60 die schaltschrankseitige Signalisierungseinrichtung 50 am Schaltschrankgehäuse 3 sowie die anlagenseitige Signalisierungseinrichtung 51 an der Windenergieanlage 1 zu steuern.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Anordnung zum Steuern einer bedarfsgerechten Hindernisbefeuerung einer Windenergieanlage (1), mit
- einem Schaltschrank (2), der ein Schaltschrankgehäuse (3) aufweist;
- einer ersten Antenneneinrichtung (27), die an dem Schaltschrankgehäuse (3) angeordnet ist;
- einer ersten Empfangseinrichtung (30), die der ersten Antenneneinrichtung (27) zugeordnet, in dem Schaltschrankgehäuse (3) angeordnet und eingerichtet ist, über die erste Antenneneinrichtung (27) Transpondersignale zu empfangen;
- einer ersten Steuereinrichtung (40; 53), die mit der ersten Empfangseinrichtung (30) verbunden und eingerichtet ist, die Transpondersignale von der ersten Empfangseinrichtung (30) zu empfangen und in Abhängigkeit hiervon erste Steuersignale für eine Hindernisbefeuerung einer Windenergieanlage (1) bereitzustellen und zu einer Schalteinrichtung (42; 52) der Hindernisbefeuerung abzugeben, mit der eine erste Signalisierungseinrichtung (41, 50, 51) der Hindernisbefeuerung in Abhängigkeit von den Steuersignalen geschaltet wird;
- einer zweiten Antenneneinrichtung (28); und
- einer Transceivereinrichtung (31), die der zweiten Antenneneinrichtung (28) zugeordnet, in dem Schaltschrankgehäuse (3) angeordnet und eingerichtet ist, über die zweite Antenneneinrichtung (28), getrennt von den Transpondersignalen, Datenkommunikationssignale zu senden und zu empfangen;
**dadurch gekennzeichnet, dass**
- der Schaltschrank (2) eingerichtet ist, im Außenbereich an einem Maschinenhaus (5) der Windenergieanlage (1) angeordnet zu werden, und das Schaltschrankgehäuse (3) im Außenbereich nutzbar ist; und
- die zweite Antenneneinrichtung (28) an dem Schaltschrankgehäuse (3) angeordnet ist.

2. Anordnung nach Anspruch 1, **dadurch gekennzeichnet, dass** die erste Steuereinrichtung (40) in dem Schaltschrankgehäuse (3) angeordnet ist.

3. Anordnung nach Anspruch 1 oder 2, **dadurch gekennzeichnet, dass** die Schalteinrichtung (42) der Hindernisbefeuerung zumindest teilweise in dem Schaltschrankgehäuse (3) gebildet ist.

4. Anordnung nach mindestens einem der vorangehenden Ansprüche, dadurch **ge-kennzeichnet**, dass die Schalteinrichtung (42) der Hindernisbefeuerung zumindest teilweise an der Windenergieanlage (1) gebildet ist.

5. Anordnung nach mindestens einem der vorangehenden Ansprüche, **dadurch gekennzeichnet, dass** an dem Schaltschrankgehäuse (3) eine gedichtete Kabelwanddurchführung (36) gebildet ist.

6. Anordnung nach mindestens einem der vorangehenden Ansprüche, dadurch **ge-kennzeichnet,** dass eine schaltschrankseitige Erdungseinrichtung mit einer Erdungseinrichtung der Windenergieanlage (1) verbunden ist.

7. Anordnung nach mindestens einem der vorangehenden Ansprüche, dadurch **ge-kennzeichnet,** dass an dem Schaltschrankgehäuse (3) außenseitig eine zweite Signalisierungseinrichtung (51, 50, 41) der Hindernisbefeuerung der Windenergieanlage (1) angeordnet ist.

8. Anordnung nach Anspruch 7, **dadurch gekennzeichnet, dass** die zweite Signalisierungseinrichtung (51, 50, 41) der Hindernisbefeuerung der Windenergieanlage (1) voneinander beabstandete Signaleinrichtungen (22, 23) aufweist.

9. Anordnung nach Anspruch 8, **dadurch gekennzeichnet, dass** die erste und die zweite Antenneneinrichtung (27, 28) an dem Schaltschrankgehäuse (3) in einem Bereich zwischen den beabstandeten Signaleinrichtungen (22, 23) angeordnet sind.

10. Anordnung nach mindestens einem der Ansprüche 7 bis 9, dadurch **gekennzeich- net,** dass die erste Signalisierungseinrichtung (41, 50, 51) und die zweite Signalisierungseinrichtung (51, 50, 41) der Hindernisbefeuerung der Windenergieanlage (1) unabhängig voneinander schaltbar sind.

11. Anordnung nach mindestens einem der vorangehenden Ansprüche, dadurch **ge-kennzeichnet,** dass die erste Signalisierungseinrichtung (41, 50, 51) der Hindernisbefeuerung der Windenergieanlage (1) eine optische Signaleinrichtung aufweist, die eingerichtet ist, optische Signale im sichtbaren Wellenlängenbereich abzugeben

12. Anordnung nach mindestens einem der vorangehenden Ansprüche, soweit auf Anspruch 7 rückbezogen, **dadurch gekennzeichnet, dass** die zweite Signalisierungseinrichtung (51, 50, 41) der Hindernisbefeuerung der Windenergieanlage (1) eine optische Signaleinrichtung aufweist, die eingerichtet ist, optische Signale im nichtsichtbaren Wellenlängenbereich abzugeben.

13. Windenergieanlage (1) mit einer Anordnung nach mindestens einem der vorangehenden Ansprüche.

14. Windenergieanlage (1) nach Anspruch 13, **dadurch gekennzeichnet, dass** ein Schaltschrank (2) an einem Maschinenhaus (5) außenseitig montiert ist.

## Claims

1. Arrangement for controlling a demand-based obstacle beaconing system of a wind turbine (1), with
- a switch cabinet (2), which has a switch-cabinet housing (3);
- a first antenna device (27), which is arranged on the switch-cabinet housing (3);
- a first receiving device (30), which is associated with the first antenna device (27), is arranged in the switch-cabinet housing (3), and is configured to receive transponder signals via the first antenna device (27);
- a first control device (40; 53), which is connected to the first receiving device (30) and is configured to receive the transponder signals from the first receiving device (30) and, as a function of the same, to provide first control signals for an obstacle beaconing system of a wind turbine (1) and to deliver them to a switch device (42; 52) of the obstacle beaconing system with which a first signalling device (41, 50, 51) of the obstacle beaconing system is switched as a function of the control signals;
- a second antenna device (28); and
- a transceiver device (31), which is associated with the second antenna device (28), is arranged in the switch-cabinet housing (3), and is configured to transmit and receive, separately from the transponder signals, data communication signals via the second antenna device (28);
**characterized in that**
- the switch cabinet (2) is configured to be arranged in the outside area on a nacelle (5) of the wind turbine (1), and the switch-cabinet housing (3) is usable in the outside area; and
- the second antenna device (28) is arranged on the switch-cabinet housing (3).

2. The arrangement according to claim 1, **characterized in that** the first control device (40) is arranged in the switch-cabinet housing (3).

3. The arrangement according to claim 1 or 2, **characterized in that** the switch device (42) of the obstacle beaconing system is formed at least partially in the switch-cabinet housing (3).

4. The arrangement according to at least one of the preceding claims, **characterized in that** the switch device (42) of the obstacle beaconing system is formed at least partially on the wind turbine (1).

5. The arrangement according to at least one of the preceding claims, **characterized in that** a sealed wall duct (36) is formed through the switch-cabinet housing (3).

6. The arrangement according to at least one of the preceding claims, **characterized in that** a switch-cabinet-side earthing device is connected to an earthing device of the wind turbine (1).

7. The arrangement according to at least one of the preceding claims, **characterized in that** a second signalling device (51, 50, 41) of the obstacle beaconing system of the wind turbine (1) is arranged externally on the switch-cabinet housing (3).

8. The arrangement according to claim 7, **characterized in that** the second signalling device (51, 50, 41) of the obstacle beaconing system of the wind turbine (1) has signal devices (22, 23) at a distance from each other.

9. The arrangement according to claim 8, **characterized in that** the first and the second antenna devices (27, 28) are arranged on the switch-cabinet housing (3) in an area between the signal devices (22, 23) at a distance from each other.

10. The arrangement according to at least one of claims 7 to 9, **characterized in that** the first signalling device (41, 50, 51) and the second signalling device (51, 50, 41) of the obstacle beaconing system of the wind turbine (1) can be switched independently of each other.

11. The arrangement according to at least one of the preceding claims, **characterized in that** the first signalling device (41, 50, 51) of the obstacle beaconing system of the wind turbine (1) has an optical signal device that is configured to emit optical signals in the visible wavelength range.

12. The arrangement according to at least one of the preceding claims, where dependent on claim 7, **characterized in that** the second signalling device (51, 50, 41) of the obstacle beaconing system of the wind turbine (1) has an optical signal device that is configured to emit optical signals in the non-visible wavelength range.

13. Wind turbine (1) with an arrangement according to at least one of the preceding claims.

14. The wind turbine (1) according to claim 13, **characterized in that** a switch cabinet (2) is mounted externally on a nacelle (5).

## Revendications

1. Agencement destiné à commander un balisage d'obstacles approprié d'une installation éolienne (1), avec
- une armoire électrique (2), qui comporte un boîtier d'armoire électrique (3),
- un premier dispositif d'antenne (27), qui est disposé sur le boîtier d'armoire électrique (3),
- un premier dispositif de réception (30), qui est attribué au premier dispositif d'antenne (27), est disposé dans le boîtier d'armoire électrique (3) et est agencé pour recevoir des signaux de transpondeur par le biais du premier dispositif d'antenne (27),
- un premier dispositif de commande (40, 53), qui est relié au premier dispositif de réception (30) et agencé pour recevoir les signaux de transpondeur du premier dispositif de réception (30) et fournir en fonction de cela des premiers signaux de commande pour un balisage d'obstacles d'une installation éolienne (1) et les délivrer à un dispositif de connexion (42, 52) du balisage d'obstacles avec lequel un premier dispositif de signalisation (41, 50, 51) du balisage d'obstacles est connecté en fonction des signaux de commande,
- un deuxième dispositif d'antenne (28), et
- un dispositif émetteur-récepteur (31), qui est attribué au deuxième dispositif d'antenne (28) est disposé et est agencé dans le boîtier d'armoire électrique (3) pour émettre et recevoir par le biais du deuxième dispositif d'antenne (28) des signaux de communication de données séparés des signaux de transpondeur,
**caractérisé en ce que**
- l'armoire électrique (2) est agencée pour être disposée dans une zone extérieure sur une nacelle (5) de l'installation éolienne (1) et le boîtier d'armoire électrique (3) peut être utilisé dans la zone extérieure, et
- le deuxième dispositif d'antenne (28) est disposé sur le boîtier d'armoire électrique (3).

2. Agencement selon la revendication 1, **caractérisé en ce que** le premier dispositif de commande (40) est disposé dans le boîtier d'armoire électrique (3).

3. Agencement selon la revendication 1 ou 2, **caractérisé en ce que** le dispositif de connexion (42) du balisage d'obstacles est formé au moins en partie dans le boîtier d'armoire électrique (3).

4. Agencement selon au moins l'une quelconque des revendications précédentes, **caractérisé en ce que** le dispositif de connexion (42) du balisage d'obstacles est formé au moins en partie sur l'installation éolienne (1).

5. Agencement selon au moins l'une quelconque des revendications précédentes, **caractérisé en ce qu'**un passage de paroi pour câbles hermétique (36) est formé sur le boîtier d'armoire électrique (3).

6. Agencement selon au moins l'une quelconque des revendications précédentes, **caractérisé en ce qu'**un dispositif de mise à la terre côté armoire électrique est relié à un dispositif de mise à la terre de l'installation éolienne (1).

7. Agencement selon au moins l'une quelconque des revendications précédentes, **caractérisé en ce qu'**un deuxième dispositif de signalisation (51, 50, 41) du balisage d'obstacles de l'installation éolienne (1) est disposé à l'extérieur sur le boîtier d'armoire électrique (3).

8. Agencement selon la revendication 7, **caractérisé en ce que** le deuxième dispositif de signalisation (51, 50, 41) du balisage d'obstacles de l'installation éolienne (1) comporte des dispositifs de signaux (22, 23) à distance les uns des autres.

9. Agencement selon la revendication 8, **caractérisé en ce que** le premier et le deuxième dispositif d'antenne (27, 28) sont disposés sur le boîtier d'armoire électrique (3) dans une zone entre les dispositifs de signaux distants (22, 23).

10. Agencement selon au moins l'une quelconque des revendications 7 à 9, **caractérisé en ce que** le premier dispositif de signalisation (41, 50, 51) et le deuxième dispositif de signalisation (51, 50, 41) du balisage d'obstacles de l'installation éolienne (1) peuvent être connectés indépendamment l'un de l'autre.

11. Agencement selon au moins l'une quelconque des revendications précédentes, **caractérisé en ce que** le premier dispositif de signalisation (41, 50, 51) du balisage d'obstacles de l'installation éolienne (1) comporte un dispositif optique de signaux, qui est agencé pour émettre des signaux optiques dans une gamme de longueurs d'ondes perceptible.

12. Agencement selon au moins l'une quelconque des revendications précédentes dans la mesure où on se réfère à la revendication 7, **caractérisé en ce que** le deuxième dispositif de signalisation (51, 50, 41) du balisage d'obstacles de l'installation éolienne (1) comporte un dispositif optique de signaux, qui est agencé pour émettre des signaux optiques dans une gamme de longueurs d'ondes perceptible.

13. Installation éolienne (1) avec un agencement selon au moins l'une quelconque des revendications précédentes.

14. Installation éolienne (1) selon la revendication 13, **caractérisée en ce qu'**une armoire électrique (2) est montée en extérieur dans une nacelle (5).
